# EUROPÄISCHE PATENTSCHRIFT

(11) **EP 3 698 937 B1**
(45) Veröffentlichungstag und Bekanntmachung des Hinweises auf die Patenterteilung: **08.03.2023**
(21) Anmeldenummer: 20169280.3
(22) Anmeldetag: 24.11.2014
(51) Int. Cl.: B29C 45/77, B29C 45/76, B29C 45/28, B29C 45/27

(54) **VERFAHREN ZUM REGELN DER FÜLLUNG VON ZUMINDEST EINER KAVITÄT**
METHOD FOR CONTROLLING THE FILLING OF AT LEAST ONE CAVITY
PROCÉDÉ POUR RÉGLER LE REMPLISSAGE D'AU MOINS UNE CAVITÉ

(30) Priorität: 22.11.2013 DE 102013112954; 14.10.2014 DE 102014114874
(43) Veröffentlichungstag der Anmeldung: 26.08.2020
(62) Teilanmeldung aus: 14818890.7
(73) Patentinhaber: Barnes Group Suisse Industries GmbH, 2544 Bettlach (CH)
(72) Erfinder: BADER, Christopherus, 8413 Neftenbach (CH)
(74) Vertreter: Rentsch Partner AG

(56) Entgegenhaltungen:
- EP-A1- 2 360 003
- JP-A- H02 182 363
- JP-A- S60 212 321
- JP-A- 2001 096 582
- US-A- 5 556 582
- US-A1- 2004 166 189
- US-A1- 2005 046 082
- US-A1- 2012 248 652
- US-B1- 6 514 440
- KAZMER D ET AL: "MULTI-CAVITY PRESSURE CONTROL IN THE FILLING AND PACKING STAGES OF THE INJECTION MOLDING PROCESS", POLYMER ENGINEERING AND SCIENCE, BROOKFIELD CENTER, US, Bd. 37, Nr. 11, 1. November 1997 (1997-11-01), Seiten 1865-1879, XP000776243, ISSN: 0032-3888, DOI: 10.1002/PEN.11837

## Beschreibung

Die Erfindung betrifft ein Verfahren zum Regeln der Füllung von zumindest einer Kavität in einer Vorrichtung zum Herstellen eines Gegenstands, insbesondere in einer Spritzgiessmaschine, wobei eine Schmelze in die Kavität durch eine Öffnung eingebracht und deren Weite verändert wird.

### Stand der Technik

Insbesondere beim Spritzgiessen aber auch beim Herstellen von Gegenständen durch andere Herstellungsverfahren, bei denen eine Masse, insbesondere eine Schmelze, in eine Kavität, in der der Gegenstand herausgeformt wird, eingebracht werden soll, stellt ein grosses Problem die Tatsache dar, dass sich die Füllung, aus welchen Gründen auch immer im Laufe der Zeit ändert, was zu unterschiedlichen Teilequalitäten führt. Aus diesem Grunde wird mit unterschiedlich guten Resultaten versucht, die Füllung der Kavitäten zu vergleichmässigen. Dies gilt sowohl für Einzel- wie auch für Mehrfach-Werkzeuge.

Werden z.B. Nadelverschlüssdüsen verwendet, kann jede einzelne Nadelverschlussdüse wie ein Spritzaggregat einer Spritzgiessmaschine betrachtet werden. Werden Änderungen von Parametern, z.B. der Viskosität, gewünscht, ist es nur möglich, die Einstellung der Maschine zu verändern und ggf. sogar zu regeln. Als Konsequenz erfolgte der gesamte Spritzgiessvorgang in allen Verschlussdüsen nahezu gleichmässig (ungefähr gleiche Einspritzgeschwindigkeit bzw. Schmelzefrontgeschwindigkeit, gleiche Verdichtung etc.). Damit besteht keine Möglichkeit, auf unterschiedliche Eigenschaften (wie z.B. unterschiedliche Wanddicken) zu reagieren. Z.B. können grossflächige Formteile, wie z.B. Stossfänger, nur über den gesamten Querschnitt betrachtet werden, obwohl sie auch in Teilbereichen sehr wohl unterschiedliche Anforderungen aufweisen.

Beispielsweise wird in der DE 101 12 126 B4 ein Verfahren zum automatischen Balancieren der volumetrischen Füllung von Kavitäten beschrieben, wobei ein Temperaturverlauf in den Kavitäten ermittelt und für alle Kavitäten vergleichmässigt wird. In einem Mehrfach-Werkzeug wird dabei der zeitliche Versatz der Signale ermittelt. Ist der Anstieg der Signale der einzelnen Kavitäten identisch, sind diese automatisch gleichzeitig volumetrisch gefüllt.

In der DE 10 2004 031 546 A1 wird ein Verfahren zum Füllen von zumindest einer Kavität eines Werkzeugs beschrieben, wobei die Schmelze unter Druck aus einer Mehrzahl von Düsen in die Kavität eingeführt wird. Dabei ist bevorzugt jeder Düse ein Sensor zugeordnet, der den Schmelzestrom in der Kavität ermittelt, wobei anhand der Signale dieses Sensors jede Düse gezielt geöffnet oder geschlossen wird. An jedem Sensor erfolgt eine Regelung, bis das Messsignal und die vorgegebene Referenz übereinstimmen. Dadurch können beim Einfüllvorgang die Düsen automatisch aufeinander abgestimmt werden.

In beiden Fällen kann eine Regelung dadurch erreicht werden, dass die Temperatur der einzelnen Heisskanaldüsen verändert wird, bis eine gleichmässige Füllung der Kavitäten erreicht ist. Hierbei ist es denkbar, dass die Schmelzefront am Ende des Fliesswegs auf Grund eines Signalanstiegs automatisch detektiert wird. Es ist aber ebenso möglich, dass beispielsweise ein Drucksensor in der Nähe des Anschnitts platziert wird und eine Druckschwelle für eine solche Regelung verwendet wird.

Bei einer anderen Anwendung handelt es sich nicht um ein Mehrfach-Werkzeug, sondern beispielsweise um ein Werkzeug mit nur einer Kavität. In diesem Fall wird der Schmelzefluss geregelt, indem über die Veränderung der Heisskanal-Düsentemperatur eine einmal optimierte Referenz-Füllzeit (beispielsweise zwischen zwei Düsen) konstant geregelt wird.

Die oben erwähnten Regelungen beziehen sich vor allem auf Heisskanal-Werkzeuge. Es gibt aber auch Kaltkanal-Werkzeuge, die nicht über Heisskanal-Düsen verfügen. Dies ist insbesondere dann der Fall, wenn es sich nicht um Thermoplaste, sondern um vernetzte Kunststoffe, wie Flüssig-Silikone, handelt. In solchen Fällen wird der Einspritzvorgang üblicherweise über sogenannte Nadelverschlussdüsen gesteuert. Derartige Nadelverschlussdüsen sind schon seit langer Zeit bekannt. Beispielsweise werden sie bereits in der DE 6913568 oder DE 73 23 461 U beschrieben. Eine neuere Beschreibung findet sich in der DE 20 2010 014 740 U1. Diese werden zu einem bestimmten Zeitpunkt geöffnet und zu einem späteren Zeitpunkt wieder geschlossen, was jedoch gleichwohl zu einem unbalancierten Zustand führen kann.

Seit neuester Zeit gibt es auch Verschlussdüsen, die nicht nur geöffnet und wieder geschlossen werden können. Diese Verschlussdüsen können individuell und schrittweise geöffnet und geschlossen werden, sodass im Endeffekt das eingespritzte Volumen der Kunststoffschmelze gezielt verändert werden kann.

US6514440B1, publiziert am 04.02.2003 im Namen von Synventive Molding Solutions Inc., offenbart ein Verfahren und eine Vorrichtung zum Regeln der Füllung einer Kavität gemäss Oberbegriff der unabhängigen Ansprüche.

### Aufgabe

Aufgabe der vorliegenden Erfindung ist es, ein Verfahren der oben genannten Art zu entwickeln, mit dem auf einfache Art und Weise eine Regelung und insbesondere eine Balancierung der Füllung von Kavitäten erfolgen kann.

### Lösung der Aufgabe

Diese Aufgabe wird durch den Gegenstand der unabhängigen Ansprüche gelöst. Zur Lösung der Aufgabe führt, dass die Weite der Öffnung auch in einer Stellung zwischen einer Schliessstellung und einer maximalen Öffnungsstellung verändert und ein- bzw. festgestellt wird.

Der grundsätzliche Erfindungsgedanke liegt darin, dass eine Öffnung, durch die eine Schmelze in eine Kavität eingebracht wird, nicht nur geschlossen oder geöffnet, sondern auch in eine Zwischenstellung gebracht werden kann. Bevorzugt ist diese Zwischenstellung ebenfalls nicht festgelegt, sondern kann vorgegebenen Werten oder geänderten Anforderungen aus einem Spritzzyklus angepasst werden. Sie können aber auch durch ein vorgegebenes Profil festgelegt sein.

Auf diese Weise kann der gesamte Spritzvorgang revolutioniert werden. Allein durch die Einstellung der Weite der Einspritzöffnung auch während dem Spritzzyklus anhand von zum Beispiel einem vorgegebenen Profil wird der gesamte Spritzvorgang gesteuert. Dies kann zum Beispiel völlig unabhängig von der Ausgestaltung eines vorgeschalteten Extruders oder einer vorgeschalteten Pumpe zur Zuführung der Kunststoffschmelze geschehen. Es genügt, wenn die Kunststoffschmelze an der Einspritzöffnung mit einem ausreichenden Druck ansteht, die Menge und die Geschwindigkeit an Kunststoff, die dann in die Kavität eingelassen wird, kann durch die Veränderung der Einspritzöffnung bestimmt werden. Das bedeutet aber auch, dass die vorgeschalteten Aggregate sehr einfach ausgelegt und gesteuert werden können.

Erreicht zum Beispiel eine Schmelzefront einen die Kavität überwachenden Temperatursensor zu spät, so genügt es, die Öffnungsweite der Einspritzöffnung zu erhöhen, so dass mehr Schmelze schneller in die Kavität eindringen kann, sofern der Druck gleich bleibt, mit der die Schmelze an der Öffnung ansteht.

Soll zum Beispiel zum Ende des Fliessweges auf Nachdruck umgeschaltet werden, so genügt es ebenfalls, wenn die Einspritzöffnung bei gleichbleibend anstehendem Schmelzedruck weiter geöffnet wird. Die vorliegende Erfindung lässt viele Möglichkeiten einer sehr einfachen Regelung der Einspritzung in eine Kavität zu, sodass hier eine abschliessende Aufzählung nicht möglich ist.

Natürlich liegt aber im Rahmen der Erfindung auch, dass einer derart veränderbaren Einspritzöffnung bekannte, die Schmelze in Druck und/oder Temperatur verändernde Aggregate vorgeschaltet sind. Die vorliegende Erfindung lässt nur die Möglichkeit der Verwendung sehr einfacher Aggregate offen.

Auch kann auf diese Weise für Kaltkanäle und Heisskanäle der Einspritzvorgang in einem Mehrfach-Werkzeug balanciert werden. Durch das individuelle Regeln jeder einzelnen Weite der Einspritzöffnung bzw. Verschlussdüse ist es möglich, für jede einzelne Öffnung bzw. Verschlussdüse individuelle Eigenschaften einzustellen. So ist es z.B. denkbar, eine Verschlussdüse in der Nähe des Airbags einer Instrumententafel mit weniger Verdichtung zu beaufschlagen (= Nadel der Verschlussdüse weiter geschlossen) als in einem dickwandigen Querschnitt. Die Möglichkeiten und Konsequenzen in der Praxis sind u.U. enorm.

Welche Parameter der in die Kavität eintretenden Schmelze ermittelt und welche Sensoren hierfür verwendet werden sollen, spielt für die vorliegende Erfindung eine untergeordnete Bedeutung. Der Grundgedanke der Erfindung bezieht sich darauf, dass eine Weite der Öffnung dazu verwendet wird, einen Füllvorgang einer oder mehrerer Kavitäten zu vergleichmässigen. Natürlich ist es auch möglich, den Füllvorgang einem vorgegebenen Referenzwert anzupassen.

Der Begriff Düse beziehungsweise Düsenöffnung soll im weiten Sinne verstanden werden. Im Rahmen der Erfindung liegt jede Öffnung, durch welche eine Schmelze in die Kavität eingebracht wird und deren Weite veränderbar ist. Nadelverschlussdüsen sind dabei nur eine Möglichkeit. Durch spezielle Antriebskomponenten ist es heute möglich, z. B. einen Verschlussnadelweg mit einer Auflösung von 0,005 mm zu justieren. Das bedeutet, dass eine Weite der Öffnung auch bei sehr kleinen Einspritzdüsen sehr genau und unabhängig voneinander eingestellt werden kann. Es geht bei der vorliegenden Erfindung darum, den Spritzgiessprozess zu regeln, indem eine oder mehrere Nadeln von Verschlussdüsen nicht nur geöffnet und geschlossen werden, sondern dass die Öffnung der einzelnen Nadeln in irgendeiner Position zwischen Öffnen und Schliessen geregelt wird.

Die Öffnung könnte aber auch durch eine Einrichtung ähnlich eines Kameraverschlusses bestimmt werden. Denkbar sind auch Schieber oder dergleichen zur Veränderung der Öffnungsweite.

Im bevorzugten Ausführungsbeispiel werden Temperatursensoren und/oder Drucksensoren verwendet. Denkbar sind aber auch andere Sensoren, wie beispielsweise elektrische Sensoren oder auch visuelle Sensoren, die einen Weg einer Schmelze beobachten. Auch hier soll der vorliegenden Erfindung keine Grenze gesetzt sein. Wesentlich ist allein, dass die Schmelze und deren Fortschritt in der Kavität beobachtet werden. Drucksensoren ermitteln den Druckverlauf in der Kavität, Temperatursensoren die Temperatur oder erkennen aber auch nur, wann die Schmelze beispielsweise bei einem entsprechenden Temperatursensor ankommt. In diesem Fall wirkt der Temperatursensor eher als normaler Schalter, welcher die Zeit ermittelt, welche eine Schmelze vom Eintritt in die Kavität bis zum Sensor braucht.

Im vorliegenden Fall werden vor allem Druck- bzw. Temperatursensoren verwendet, wie sie beispielsweise in der DE 10 2004 003 278 A1 beschrieben sind. Die Sensoren brauchen aber nicht direkt mit der Schmelze in Berührung zu kommen, sie können auch durch beispielsweise dünne Stege von der Kavität getrennt sein.

Neu ist vor allem die Möglichkeit, dass solche Regelungen automatisch mit Hilfe von Werkzeuginnendruck- und Werkzeugwandtemperatur-Sensoren durchgeführt werden, und dadurch von Zyklus zu Zyklus automatisch angepasst werden können. Die meisten der in der Vergangenheit bereits diskutierten Regelungen könnten somit unabhängig von der Spritzgiessmaschine auch für jede einzelne Verschlussdüse durchgeführt werden.

Es kommen folgende Regelungen in Frage:
a) Heisskanal-Balancierung über die Öffnungsweite der Nadelverschlussdüsen
b) Heisskanal-Regelung über die Öffnungsweite einer Nadelverschlussdüse (regelt den Schmelzestrom in einem bestimmten Bereich, z.B. anhand einer Referenz)
c) Kaltkanal-Balancierung über die Öffnungsweite der Nadelverschlussdüsen
d) Schergeschwindigkeitsregelung für jede einzelne Verschlussdüse über die Öffnungsweite der Nadelverschlussdüse. Das bedeutet, dass die Schergeschwindigkeit im Schmelzestrom über zwei Sensoren gemessen wird, und die Position der Nadel entsprechend verändert wird.
e) Schubspannungsregelung (analog zu d)
f) Sehr wichtig: Kompressionsregelung für jede einzelne Verschlussdüse über die Öffnungsweite der Nadelverschlussdüse. Das bedeutet, dass nach dem Einspritzvorgang bzw. nach dem Umschalten auf Nachdruck die Position der Düse wiederum verändert wird, um mehr oder weniger Kompression vor der jeweiligen Düse zu erzeugen. Gemessen wird hierbei der Werkzeuginnendruck bei einer Schwelle (z.B. bei 80 % des Maximalwertes) analog zur bereits realisierten Kompressionsregelung
g) Individuelle Regelung der Kühlzeit für jede einzelne Nadelverschlussdüse über die Öffnungsweite der Nadelverschlussdüse bei Heisskanälen (Thermoplaste). Das bedeutet, dass jede Düse individuell geschlossen wird, sobald die notwendige Kühlzeit für diesen Abschnitt erreicht wird.
h) Individuelle Regelung der Reaktionszeit für jede einzelne Nadelverschlussdüse über die Öffnungsweite der Nadelverschlussdüse bei Kaltkanälen (Duroplaste, LSR, Reaktionsverfahren wie RIM). Das bedeutet, dass jede Düse individuell geschlossen wird, sobald die notwendige Reaktionszeit für diesen Abschnitt erreicht wird.
i) Individuelle Regelung von Mehrkomponenten über die Öffnungsweite von Verschlussdüsen. Das bedeutet, dass eine beliebige Anzahl von Materialkomponenten individuell geregelt werden können.
j) Individuelle Regelung von Verschlussdüsen, die an einigen Düsen Einlegeteile umspritzen, an anderen aber nicht.
k) Individuelle Regelung von Verschlussdüsen, die Einlegeteile unterschiedlicher Grösse umspritzen
l) Individuelle Regelung von Verschlussdüsen, die bei Kaskadenverfahren je nach Position unterschiedlich geregelt werden sollen. Das bedeutet, dass der Fliessweg von der ersten bis zur zweiten Düse mit einer unterschiedlichen Geschwindigkeit oder Verdichtung erfolgt, im Gegensatz zum zweiten, dritten oder folgende Fliessweg
m) Individuelle Regelung von unterschiedlichen Teilen eines Familienwerkzeugs, bei dem die Eigenschaften für jedes einzelne Teil individuell einstellbar sind
n) Individuelle Regelung von Verschlussdüsen bei Gasinnendruck- und Wasserinjektionsverfahren

### Diese Aufzählung ist aber keineswegs abschliessend!

Die meisten der genannten Regelungen, die im Rahmen der Erfindung natürlich nicht abschliessend sind, kommen für Kaltkanäle und Heisskanäle in Frage.

Von besonderer Bedeutung und hervorzuheben ist für alle Regelungen, dass nicht nur ein einziger Wert pro Düse eingestellt und geregelt werden kann, sondern auch ein ganzes Einstellprofil (für Düse öffnen und schliessen). Die Konsequenzen sind, dass der Prozess weitestgehend unabhängig von der Maschineneinstellung erfolgen kann, da es sich um eine Regelung im Werkzeug handelt. Auf teure Maschinenschnittstellen kann verzichtet werden. Viele Maschinenhersteller bieten eine solche Maschinenschnittstelle nicht einmal an.

Von der Erfindung wird auch eine Vorrichtung zur Durchführung des Verfahrens umfasst, bei welcher der Öffnung eine Einrichtung zum Verändern der Weite der Öffnung anhand von Signalen, die von zumindest einem Sensor in der Kavität kommen, zugeordnet ist. Dazwischen dürfte eine Regeleinheit geschaltet sein, welche die Signale miteinander und/oder mit vorgegebenen Signalen vergleicht und danach die Weite der Öffnung zur Vergleichmässigung des Einspritzvorganges regelt. Bevorzugt wird der Sensor quasi als Schalter verwendet, der in dem Fall reagiert, wenn ihn die Schmelzefront erreicht. In diesem Fall gibt er ein Signal ab, sodass die Regelung der Öffnungsweite beginnen kann.

Die Offenbarung umfasst also:
(1) Ein Verfahren zum Regeln der Füllung von zumindest einer Kavität in einer Vorrichtung zum Herstellen eines Gegenstands, insbesondere in einer Spritzgiessmaschine, wobei eine Schmelze in die Kavität durch eine Öffnung eingebracht und deren Weite verändert wird, wobei die Weite der Öffnung auch in einer Stellung zwischen einer Schliessstellung und einer maximalen Öffnungsstellung verändert und ein- bzw. festgestellt wird.
   Die Offenbarung umfasst ferner die Ausführungsbeispiele (2) - (9) zu diesem Verfahren (1):
(2) Das Verfahren nach (1), wobei eine Befüllung der Kavität und insbesondere der Eintritt der Schmelze und/oder eine Schmelzefront in die/der Kavität mittels Sensoren beobachtet und zum Regeln der Füllung die Weite der Öffnung verändert wird.
(3) Das Verfahren nach (1) oder (2), wobei es sich bei der Öffnung um eine solche in einer Nadelverschlussdüse handelt, bei der die Weite der Öffnung durch eine Nadel bestimmt wird.
(4) Das Verfahren nach wenigstens einem der Verfahren (1) bis (3), wobei zumindest ein Temperatursensor und/oder ein Drucksensor in der Kavität zur Ermittlung von Parametern der Schmelze verwendet wird/werden.
(5) Das Verfahren nach (4), wobei ein Temperatursensor/Drucksensor gegen Ende eines Fliesswegs der Schmelze in der Kavität positioniert wird.
(6) Das Verfahren nach (4) oder (5), wobei ein Temperatursensor/Drucksensor in der Nähe eines Anschnitts positioniert wird.
(7) Das Verfahren nach wenigstens einem der vorhergehenden Verfahren (1) bis (6), wobei eine Mehrzahl von Kavitäten entsprechend beobachtet und aufeinander abgeglichen werden.
(8) Das Verfahren nach wenigstens einem der vorhergehenden Verfahren (1) bis (7), wobei die Regelung der Weite der Einspritzöffnung auch während einem Spritzzyklus durchgeführt wird.
(9) Das Verfahren nach wenigstens einem der vorhergehenden Verfahren (1) bis (8), wobei die Regelung der Weite der Einspritzöffnung anhand eines vorgegebenen Profils stattfindet.

Die Offenbarung umfasst ferner:
(10) Eine Vorrichtung zur Durchführung eines der Verfahren (1) bis (9), wobei der Öffnung eine Einrichtung zum Verändern der Weite der Öffnung anhand von Signalen, die von zumindest einem Sensor in der Kavität kommen, zugeordnet ist.

Die Offenbarung umfasst auch:
(11) Eine Vorrichtung gemäss (10), wobei der Sensor als Schalter für die Veränderung der Weite der Öffnung verwendbar ist.

## Patentansprüche

1. Verfahren zum Regeln der Füllung von zumindest einer Kavität in einer Spritzgiessmaschine, wobei
eine Schmelze in die Kavität durch eine Öffnung eingebracht und deren Weite verändert wird,
die Weite der Öffnung auch in einer Stellung zwischen einer Schliessstellung und einer maximalen Öffnungsstellung verändert und ein- bzw. festgestellt wird, und
eine Befüllung der Kavität und insbesondere der Eintritt der Schmelze und/oder eine Schmelzefront in die/der Kavität mittels Sensoren beobachtet und zum Regeln der Füllung die Weite der Öffnung verändert wird,
**dadurch gekennzeichnet, dass**
die Regelung der Weite der Einspritzöffnung auch während einem Spritzzyklus durchgeführt wird, wobei
solche Regelungen automatisch mit Hilfe von Werkzeuginnendruck- und Werkzeugwandtemperatur-Sensoren durchgeführt werden und dadurch von Zyklus zu Zyklus automatisch anpassbar sind.

2. Verfahren nach Anspruch 1, **dadurch gekennzeichnet, dass** die Öffnung in eine Zwischenstellung gebracht wird, die geänderten Anforderungen aus einem Spritzzyklus angepasst wird.

3. Verfahren nach Anspruch 1 oder 2, **dadurch gekennzeichnet, dass** durch die Einstellung der Weite, insbesondere alleine durch die Einstellung der Weite, der Einspritzungsöffnung auch während dem Spritzzyklus der gesamte Spritzvorgang gesteuert wird.

4. Verfahren nach wenigstens einem der vorhergehenden Ansprüche 1 bis 3, **dadurch gekennzeichnet, dass** der Öffnung eine Einrichtung zum Verändern der Weite der Öffnung anhand von Signalen, die von zumindest einem Sensor in der Kavität kommen, zugeordnet ist.

5. Verfahren nach wenigstens einem der vorhergehenden Ansprüche, **dadurch gekennzeichnet, dass** eine Schergeschwindigkeitsregelung für jede einzelne Verschlussdüse über die Öffnungsweite der Nadelverschlussdüse durchgeführt wird, indem die Schergeschwindigkeit im Schmelzestrom über zwei Sensoren gemessen wird und die Position der Nadel entsprechend verändert wird.

6. Verfahren nach wenigstens einem der vorhergehenden Ansprüche, **dadurch gekennzeichnet, dass** eine Schubspannungsregelung für jede einzelne Verschlussdüse über die Öffnungsweite der Nadelverschlussdüse durchgeführt wird, indem die Schubspannung im Schmelzestrom über zwei Sensoren gemessen wird und die Position der Nadel entsprechend verändert wird.

7. Verfahren nach wenigstens einem der vorhergehenden Ansprüche, **dadurch gekennzeichnet, dass** eine individuelle Regelung von Verschlussdüsen über die Öffnungsweite von Verschlussdüsen durchgeführt wird, indem eine Anzahl von Materialkomponenten individuell geregelt wird.

8. Verfahren nach wenigstens einem der vorhergehenden Ansprüche, **dadurch gekennzeichnet, dass** eine individuelle Regelung von Verschlussdüsen bei Gasinnendruck- und Wasserinjektionsverfahren durchgeführt wird.

9. Verfahren nach wenigstens einem der vorhergehenden Ansprüche, **dadurch gekennzeichnet, dass** die Kunststoffschmelze an der Einspritzöffnung mit einem ausreichenden Druck ansteht, und die Menge und die Geschwindigkeit an Kunststoff, die dann in die Kavität eingelassen wird, durch die Veränderung der Einspritzöffnung bestimmt wird.

10. Verfahren nach wenigstens einem der vorhergehenden Ansprüche, **dadurch gekennzeichnet, dass** es sich bei der Öffnung um eine solche in einer Nadelverschlussdüse handelt, bei der die Weite der Öffnung durch eine Nadel bestimmt wird, oder dass die Öffnung durch eine Einrichtung gemäss einem Kameraverschluss oder durch einen Schieber zur Veränderung der Öffnungsweite bestimmt wird.

11. Verfahren nach wenigstens einem der vorhergehenden Ansprüche, **dadurch gekennzeichnet, dass** zumindest ein Temperatursensor und/oder ein Drucksensor in der Kavität zur Ermittlung von Parametern der Schmelze verwendet wird/werden.

12. Verfahren nach Anspruch 11, **dadurch gekennzeichnet, dass** ein Temperatursensor/Drucksensor gegen Ende eines Fliesswegs der Schmelze in der Kavität und/oder in der Nähe eines Anschnitts positioniert wird.

13. Verfahren nach wenigstens einem der vorhergehenden Ansprüche, **dadurch gekennzeichnet, dass** eine Mehrzahl von Kavitäten entsprechend beobachtet und aufeinander abgeglichen werden.

14. Spritzgiessmaschine zur Durchführung des Verfahrens zum Regeln der Füllung von zumindest einer Kavität mach wenigstens einem der vorhergehenden Ansprüche, wobei
eine Schmelze in die Kavität durch eine Öffnung eingebracht und deren Weite verändert wird,
die Weite der Öffnung auch in einer Stellung zwischen einer Schliessstellung und einer maximalen Öffnungsstellung verändert und ein- bzw. festgestellt wird, und
eine Befüllung der Kavität und insbesondere der Eintritt der Schmelze und/oder eine Schmelzefront in die/der Kavität mittels Sensoren beobachtet und zum Regeln der Füllung die Weite der Öffnung verändert wird,
**dadurch gekennzeichnet, dass**
der Öffnung eine Einrichtung zum Verändern der Weite der Öffnung anhand von Signalen, die von zumindest einem der Sensoren in der Kavität kommen, zugeordnet ist, die Regelung der Weite der Einspritzöffnung auch während einem Spritzzyklus durchgeführt wird, und solche Regelungen automatisch mit Hilfe von Werkzeuginnendruck- und Werkzeugwandtemperatur-Sensoren durchgeführt werden und dadurch von Zyklus zu Zyklus automatisch anpassbar sind.

15. Spritzgiessmaschine nach Anspruch 14, **dadurch gekennzeichnet, dass** der Sensor als Schalter für die Veränderung der Weite der Öffnung verwendbar ist.

## Claims

1. Method for regulating the filling of at least one cavity in an injection-moulding machine, wherein
a melt is introduced into the cavity through an opening and the width of the opening is altered, the width of the opening is also altered and set or fixed in a position between a closed position and a fully open position, and
charging of the cavity and in particular the entry of the melt into and/or a melt front in the cavity is monitored by means of sensors and the width of the opening is altered to regulate the filling,
**characterized in that**
the width of the injection opening is also regulated during an injection-moulding cycle, wherein
such regulations are carried out automatically with the aid of mould internal pressure sensors and mould wall temperature sensors and as a result are adaptable automatically from cycle to cycle.

2. Method according to Claim 1, **characterized in that** the opening is brought into an intermediate position which is adapted to changed requirements of an injection-moulding cycle.

3. Method according to Claim 1 or 2, **characterized in that** the entire injection-moulding operation is controlled by the width of the injection opening being set, in particular solely by the width of the injection opening being set, also during the injection-moulding cycle.

4. Method according to at least one of the preceding Claims 1 to 3, **characterized in that** the opening is assigned a device for altering the width of the opening on the basis of signals that come from at least one sensor in the cavity.

5. Method according to at least one of the preceding claims, **characterized in that** a shear rate regulation for each individual valve nozzle is carried out via the opening width of the needle valve nozzle **in that** the shear rate in the melt flow is measured via two sensors and the position of the needle is altered in a corresponding manner.

6. Method according to at least one of the preceding claims, **characterized in that** a shear stress regulation for each individual valve nozzle is carried out via the opening width of the needle valve nozzle **in that** the shear stress in the melt flow is measured via two sensors and the position of the needle is altered in a corresponding manner.

7. Method according to at least one of the preceding claims, **characterized in that** individual regulation of valve nozzles is carried out via the opening width of valve nozzles **in that** a number of material components is individually regulated.

8. Method according to at least one of the preceding claims, **characterized in that** individual regulation of valve nozzles is carried out in gas internal pressure and water injection processes.

9. Method according to at least one of the preceding claims, **characterized in that** the plastic melt is present at the injection opening at a sufficient pressure, and the quantity and speed of plastic which is then let into the cavity is determined by the alteration to the injection opening.

10. Method according to at least one of the preceding claims, **characterized in that** the opening is one in a needle valve nozzle, in which the width of the opening is determined by a needle, or **in that** the opening is determined by a device corresponding to a camera shutter or by a slider for altering the opening width.

11. Method according to at least one of the preceding claims, **characterized in that** at least one temperature sensor and/or pressure sensor is/are used in the cavity in order to determine parameters of the melt.

12. Method according to Claim 11, **characterized in that** a temperature sensor/pressure sensor is positioned towards the end of a flow path of the melt in the cavity and/or in the vicinity of an ingate.

13. Method according to at least one of the preceding claims, **characterized in that** a plurality of cavities are monitored in a corresponding manner and are aligned with one another.

14. Injection-moulding machine for carrying out the method for regulating the filling of at least one cavity according to at least one of the preceding claims, wherein
a melt is introduced into the cavity through an opening and the width of the opening is altered, the width of the opening is also altered and set or fixed in a position between a closed position and a fully open position, and
charging of the cavity and in particular the entry of the melt into and/or a melt front in the cavity is monitored by means of sensors and the width of the opening is altered to regulate the filling,
**characterized in that**
the opening is assigned a device for altering the width of the opening on the basis of signals that come from at least one of the sensors in the cavity, the width of the injection opening is also regulated during an injection-moulding cycle, and
such regulations are carried out automatically with the aid of mould internal pressure sensors and mould wall temperature sensors and as a result are adaptable automatically from cycle to cycle.

15. Injection-moulding machine according to Claim 14, **characterized in that** the sensor is usable as a switch for altering the width of the opening.

## Revendications

1. Procédé de régulation du remplissage d'au moins une cavité située dans une machine de moulage par injection, une matière en fusion étant introduite dans la cavité par une ouverture et la largeur de celle-ci étant modifiée, la largeur de l'ouverture étant modifiée et réglée ou fixée dans une position située entre une position fermée et une position ouverte maximale, et
un remplissage de la cavité et en particulier l'entrée de la matière en fusion et/ou un front de matière en fusion dans la cavité étant observés au moyen de capteurs et la largeur de l'ouverture étant modifiée pour réguler le remplissage,
**caractérisé en ce que**
la régulation de la largeur de l'ouverture d'injection est également effectuée pendant un cycle d'injection,
ces régulations étant effectuées automatiquement à l'aide de capteurs de pression interne d'outil et de température de paroi d'outil et pouvant donc être automatiquement adaptées d'un cycle à l'autre.

2. Procédé selon la revendication 1, **caractérisé en ce que** l'ouverture est amenée dans une position intermédiaire qui est adaptée à des besoins modifiés d'un cycle d'injection.

3. Procédé selon la revendication 1 ou 2, **caractérisé en ce que** tout le processus d'injection est également commandé pendant le cycle d'injection par ajustement de la largeur, notamment uniquement par ajustement de la largeur de l'ouverture d'injection.

4. Procédé selon l'une au moins des revendications précédentes 1 à 3, **caractérisé en ce que** l'ouverture est associée à un dispositif de modification de la largeur de l'ouverture sur la base de signaux provenant d'au moins un capteur situé dans la cavité.

5. Procédé selon l'une au moins des revendications précédentes, **caractérisé en ce qu'**une régulation de la vitesse de cisaillement est effectuée pour chaque buse à obturation individuelle sur la largeur d'ouverture de la buse à obturation à pointeau par le fait que la vitesse de cisaillement dans la matière en fusion est mesurée à l'aide de deux capteurs et la position du pointeau est modifiée en conséquence.

6. Procédé selon l'une au moins des revendications précédentes, **caractérisé en ce que** la régulation de la contrainte de cisaillement est effectuée pour chaque buse à obturation individuelle sur la largeur d'ouverture de la buse à obturation à pointeau par le fait que la contrainte de cisaillement dans le flux de matière en fusion est mesurée à l'aide de deux capteurs et la position du pointeau est modifiée en conséquence.

7. Procédé selon l'une au moins des revendications précédentes, **caractérisé en ce qu'**une régulation individuelle des buses à obturation est effectuée sur la largeur d'ouverture des buses d'obturation par le fait qu'un nombre de composants de matière est régulé individuellement.

8. Procédé selon l'une au moins des revendications précédentes, **caractérisé en ce qu'**une régulation individuelle des buses à obturation est effectuée dans le cas de procédés à pression interne de gaz et d'injection d'eau.

9. Procédé selon l'une au moins des revendications précédentes, **caractérisé en ce que** la matière synthétique en fusion est présente au niveau de l'ouverture d'injection avec une pression suffisante, et la quantité et la vitesse de la matière synthétique qui est ensuite admise dans la cavité sont déterminées par modification de l'ouverture d'injection.

10. Procédé selon l'une au moins des revendications précédentes, **caractérisé en ce que** l'ouverture est celle d'une buse à obturation à pointeau pour laquelle la largeur de l'ouverture est déterminée par un pointeau, ou **en ce que** l'ouverture est déterminée par un dispositif conforme à un obturateur de caméra ou par un coulisseau destiné à modifier la largeur d'ouverture.

11. Procédé selon l'une au moins des revendications précédentes, **caractérisé en ce qu'**au moins un capteur de température et/ou un capteur de pression est/sont utilisés dans la cavité pour déterminer des paramètres de la matière en fusion.

12. Procédé selon la revendication 11, **caractérisé en ce qu'**un capteur de température/capteur de pression est positionné vers l'extrémité d'un chemin d'écoulement de la matière en fusion dans la cavité et/ou à proximité d'un point d'injection.

13. Procédé selon l'une au moins des revendications précédentes, **caractérisé en ce qu'**une pluralité de cavités sont observées de manière appropriée et comparées les unes aux autres.

14. Machine de moulage par injection destinée à la mise en œuvre du procédé de régulation du remplissage d'au moins une cavité selon l'une au moins des revendications précédentes,
une matière en fusion étant introduite dans la cavité par une ouverture et la largeur de celle-ci étant modifiée, la largeur de l'ouverture étant modifiée et réglée ou fixée dans une position située entre une position fermée et une position ouverte maximale, et
un remplissage de la cavité et en particulier l'entrée de la matière en fusion et/ou un front de matière en fusion dans la cavité étant observés au moyen de capteurs et la largeur de l'ouverture étant modifiée afin de réguler le remplissage,
**caractérisée en ce que**
l'ouverture est associée à un dispositif de modification de la largeur de l'ouverture sur la base de signaux provenant d'au moins un des capteurs situés dans la cavité, la régulation de la largeur de l'ouverture d'injection étant également effectuée lors d'un cycle d'injection, et
ces régulations sont effectuées automatiquement à l'aide de capteurs de pression interne d'outil et de température de paroi d'outil et peuvent donc être automatiquement adaptées d'un cycle à l'autre.

15. Machine de moulage par injection selon la revendication 14, **caractérisée en ce que** le capteur peut être utilisé comme commutateur destiné à modifier la largeur de l'ouverture.
